(19) Europäisches Patentamt
European Patent Office
Office européen des brevets

(11) **EP 2 680 428 A2**

(12) **EUROPEAN PATENT APPLICATION**

(43) Date of publication:
**01.01.2014 Bulletin 2014/01**

(51) Int Cl.:
***H02M 7/483*** *(2007.01)*

(21) Application number: **13275098.5**

(22) Date of filing: **25.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012 KR 20120071037**

(71) Applicants:
• **Samsung Electro-Mechanics Co., Ltd**
 **Suwon, Gyunggi-Do (KR)**
• **Industry Foundation Of Chonnam National University**
 **Buk-gu**
 **Gwangju-city (KR)**

(72) Inventors:
• **Song, Doo Young**
 **Gyunggi-do (KR)**
• **Park, Sung Jun**
 **Gwangju (KR)**
• **Heo, Min Ho**
 **Gyunggi-do (KR)**
• **Kim, Tae Hoon**
 **Gyunggi-do (KR)**
• **Lee, Tae Won**
 **Gyunggi-do (KR)**

(74) Representative: **Potter Clarkson LLP**
 **The Belgrave Centre**
 **Talbot Street**
 **Nottingham**
 **NG1 5GG (GB)**

(54) **Multi-level converter, and inverter having the same and solar power supply apparatus having the same**

(57) There are provided a multi-level converter capable of outputting power having various voltage levels with respect to a single input power supply by using a simple circuit, an inverter having the same, and a solar power supply apparatus having the same. The multi-level converter includes a first buck-boost unit having a first power switch switching an input power supply and outputting a first power having a voltage level varied according to switching of the first power switch; a bypass unit outputting a second power having a voltage level of the input power supply; and a second buck-boost unit having a second power switch switching the input power supply and outputting a third power having a voltage level varied according to switching of the second power switch.

FIG. 1

EP 2 680 428 A2

## Description

## CROSS-REFERENCE TO RELATED APPLICATIONS

This application claims the priority of Korean Patent Application No. 10-2012-0071037 filed on June 29, 2012, in the Korean Intellectual Property Office, the disclosure of which is incorporated herein by reference.

## BACKGROUND OF THE INVENTION

### Field of the Invention

The present invention relates to a multi-level converter capable of outputting power having various voltage levels, an inverter having the same, and a solar power supply apparatus having the same.

### Description of the Related Art

As environmental pollution, global warming, and the like, are gradually increasing in seriousness due to the use of fossil fuels and emissions of carbon dioxide ($CO_2$), mono-nitrogen oxides (NOx), sulfur oxides (Sox), and the like, from the end of 20th century, the development of and demand for sources of renewable energy have increased. In particular, recognition of the necessity of and demand for technological development in the area of renewable energy have increased, due to national liability for reductions in the emission of greenhouse gases, based on the Kyoto Protocol, and increases in crude oil prices. Today, the issue of energy resources is directly connected to national security issues, and the willingness to reduce carbon dioxide emissions as well as developing technologies related thereto has been recognized as national competitiveness strategies.

In spite of a disadvantage in terms of low efficiency thereof, among various new renewable energy sources, a photovoltaic (PV) cell (solar cell), providing a clean, inexhaustible energy source and utilizing national semiconductor technologies, has been continuously expanded in a national markets recently. In the case of foreign countries, a solar power supply apparatus using the photovoltaic (PV) cell has been commercialized with the leadership of Japanese and German companies, based on technical skills and financial power accumulated over a long period of time.

A solar power supply apparatus includes a converter that converts DC power from the photovoltaic (PV) cell into DC power having a predetermined voltage level, and an inverter that converts the converted DC power from the converter into commercial AC power as described in the following Related Art Document. In this Related Art Document, power conversion efficiency of the converter has become the most important issue.

As the capacity of the converter is increased, 2-level topology has mainly been adopted in converters. However, it may be difficult to increase the power conversion efficiency in a converter. Meanwhile, a multi-level converter that has recently been actively researched may have high power conversion efficiency and low rates of harmonic generation and voltage stress in a power switch; however, in this type of multilevel converter, circuit complexity and manufacturing costs may be increased due to the increase in the number of required components.

[Related Art Document]

Korean Patent Laid-Open Publication No. 10-2009-0133036

## SUMMARY OF THE INVENTION

An aspect of the present invention provides a multi-level converter capable of providing output power having various voltage levels with respect to a single input power supply using a simple circuit, an inverter having the same, and a solar power supply apparatus having the same.

According to an aspect of the present invention, there is provided a multi-level converter, including: a first buck-boost unit having a first power switch switching an input power supply and outputting a first power having a voltage level varied according to switching of the first power switch; a bypass unit outputting a second power having a voltage level of the input power supply; and a second buck-boost unit having a second power switch switching the input power supply and outputting a third power having a voltage level varied according to switching of the second power switch.

The voltage level of the first power of the first buck-boost unit and the voltage level of the third power of the second buck-boost unit may be varied individually.

The voltage level of the first power of the first buck-boost unit may be varied according to the duty of the first power switch, and the voltage level of the third power of the second buck-boost unit may be varied according to the duty of the second power switch.

The first buck-boost unit may further include: a first inductor charging and discharging the power switched according to the switching of the first power switch; a first capacitor charging and discharging power from the first inductor; and a first diode providing a power transfer path according to the switching of the power switch.

The second buck-boost unit may further include: a second inductor charging and discharging the power switched according to the switching of the second power switch; a second capacitor charging and discharging power from the second inductor; and a second diode providing a power transfer path according to the switching of the power switch.

The bypass unit may have at least one capacitor electrically connected between one terminal and the other terminal of the input power supply to which the input power supply is input.

The first power switch may include a drain connected to one terminal of the input power supply to which the input power supply is input, a source connected to one terminal of the first inductor and a cathode of the first diode, and a gate receiving a control signal, and the first capacitor may be connected to the other terminal of the first inductor and an anode of the first diode.

The second power switch may include a source connected to the other terminal of the input power supply to which the input power supply is input, a drain connected to one terminal of the second inductor and an anode of the second diode, and a gate receiving a control signal, and the second capacitor may be connected to the other terminal of the second inductor and a cathode of the second diode.

According to another aspect of the present invention, there is provided an inverter, including: a multi-level converter including a first buck-boost unit having a first power switch switching an input power supply and outputting a first power having a voltage level varied according to switching of the first power switch, a bypass unit outputting a second power having a voltage level of the input power supply, and a second buck-boost unit having a second power switch switching the input power supply and outputting a third power having a voltage level varied according to switching of the second power switch; and an inverter unit switching first to third powers output from the multi-level converter unit to output AC power.

The inverter unit may switch the first to third powers, respectively, to output AC power.

The inverter unit may switch a sum of the voltage levels of the first to third powers to output AC power.

According to another aspect of the present invention, there is provided a solar power supply apparatus, including: a multi-level converter including a first buck-boost unit having a first power switch switching an input power supply from a solar cell and outputting a first power having a voltage level varied according to switching of the first power switch, a bypass unit outputting a second power having a voltage level of the input power supply, and a second buck-boost unit having a second power switch switching the input power supply and outputting a third power having a voltage level varied according to switching of the second power switch; and an inverter unit switching power output from the multi-level converter unit to output AC power.

The solar power supply apparatus may further include a control unit controlling the switching of the multi-level converter and the inverter unit.

**BRIEF DESCRIPTION OF THE DRAWINGS**

The above and other aspects, features and other advantages of the present invention will be more clearly understood from the following detailed description taken in conjunction with the accompanying drawings, in which:

FIG. 1 is a circuit diagram showing a schematic configuration of a multi-level converter according to an embodiment of the present invention;

FIGS. 2A and 2B are circuit diagrams showing a current loop of a first buck-boost unit of the multi-level converter according to the embodiment of the present invention;

FIGS. 3A and 3B are circuit diagrams showing a current loop of a second buck-boost unit of the multi-level converter according to the embodiment of the present invention;

FIG. 4A through 4C are circuit diagrams showing that multi-power of the multi-level converter according to the embodiment of the present invention is output;

FIGS. 5A and 5B are graphs showing an output waveform of the multi-level converter according to the embodiment of the present invention; and

FIGS. 6 and 7 are block diagrams showing a schematic configuration of an inverter having the multi-level converter according to the embodiment of the present invention and a solar power supply apparatus having the same.

**DETAILED DESCRIPTION OF THE EMBODIMENTS**

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

A case in which any one part is connected with the other part includes a case in which the parts are directly connected with each other and a case in which the parts are indirectly connected with each other, with other elements interposed therebetween.

In addition, unless explicitly described otherwise, "comprising" any components will be understood to imply the inclusion of other components but not the exclusion of any other components.

Hereinafter, embodiments of the present invention will be described in detail with reference to the accompanying drawings.

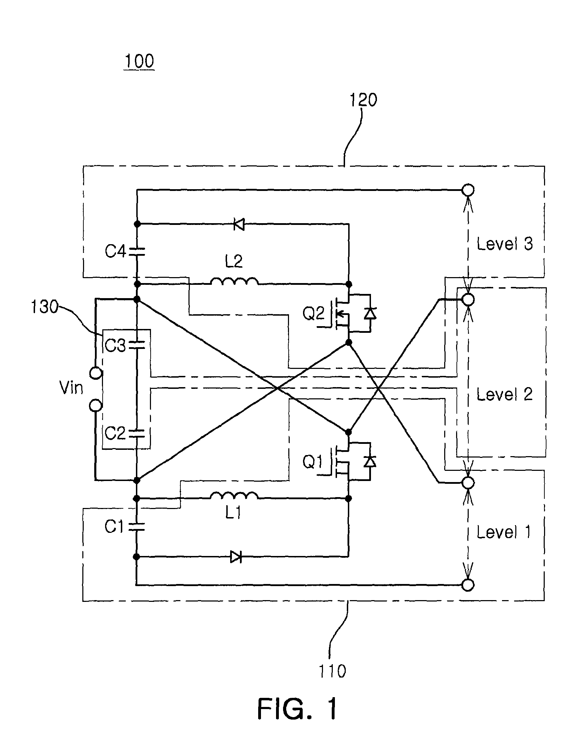

FIG. 1 is a circuit diagram showing a schematic configuration of a multi-level converter according to an embodiment of the present invention.

Referring to FIG. 1, a multi-level converter 100 according to an embodiment of the present invention may include first and second buck-boost units 110 and 120 and a bypass unit 130.

The first buck-boost unit 110 may include a first inductor L1, a first capacitor C1, a first diode D1, and a first power switch Q1 for switching an input power supply Vin.

The first power switch Q1 may be switching device, for example, a MOSFET and may include a drain connected to one of both terminals of the input power supply to which the input power supply Vin is input, a source connected to one terminal of the first inductor L1 and a cathode of the first diode D1, and a gate receiving a control signal. The first capacitor C1 may be connected to the other terminal of the first inductor L1 and an anode of the first diode D1.

The second buck-boost unit 120 may include a second inductor L2, a second capacitor C4, a second diode D2, and a second power switch Q2 for switching the input power supply Vin.

The second power switch Q2 may also be, for example, a MOSFET and include a source connected to the other one of both terminals of the input power supply, a drain connected to one terminal of the second inductor L2 and an anode of the second diode D2, and a gate receiving a control signal, wherein the second capacitor C4 may be connected to the other one of the second inductor L2 and a cathode of the second diode D2.

Due to the switching of the foregoing first and second power switches Q1 and Q2, voltage levels Level1 and Level3 of first power and third power output from the first and second buck-boost units 110 and 120 may be varied individually.

The bypass unit 130 may include at least one capacitor electrically connected between the terminals of the input power supply and may include a plurality of capacitors C2 and C3 in consideration of voltage resistance. The bypass unit 130 may output second power Level2 having an original voltage level of the input power supply Vin.

As described above, the multi-level converter 100 according to the embodiment of the present invention may output the first power Level1, the second power Level2, and the third power Level3.

An operation of the multi-level converter 100 according to the embodiment of the present invention will be described with the reference to the drawings.

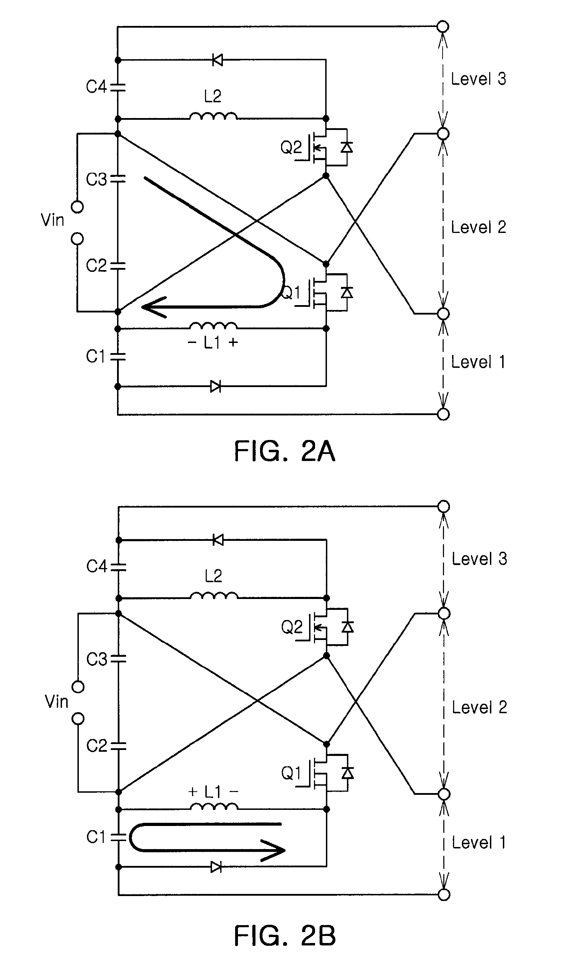

FIGS. 2A and 2B are circuit diagrams showing a current loop of a first buck-boost unit of the multi-level converter according to the embodiment of the present invention.

Referring to FIG. 1 and FIG. 2A, a current loop is formed as shown in an arrow during the switching-on of the first power switch Q1, and the first inductor L1 may be charged with power through the current loop formed by the switching-on of the first power switch Q1.

Referring to FIGS. 1 and 2B, when the first power switch Q1 is switched-off, another current loop is formed as shown in an arrow, and the power charged in the first inductor L1 may be charged in the first capacitor C1 along a transfer path formed through the first diode D1 to output the first power Level1.

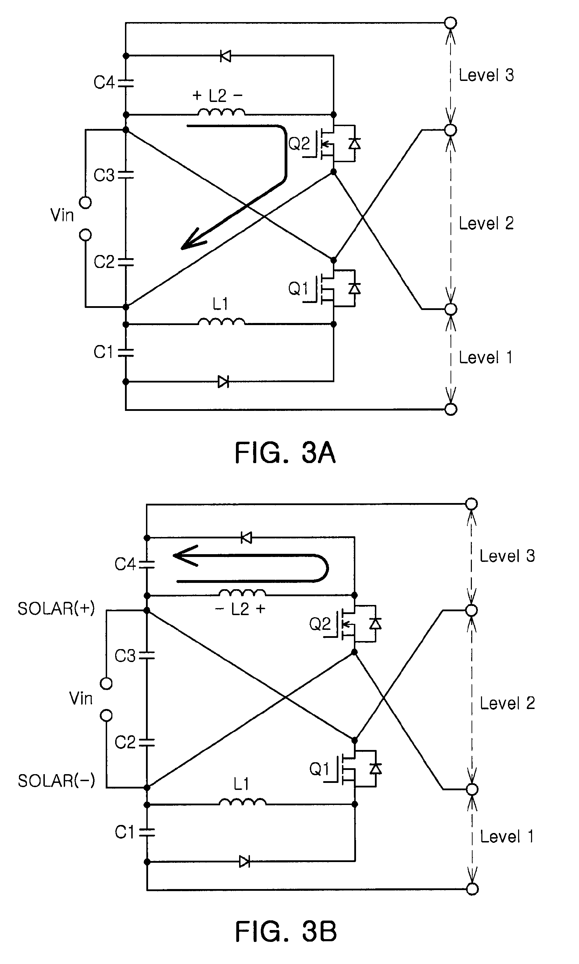

FIGS. 3A and 3B are circuit diagrams showing a current loop of a second buck-boost unit of the multi-level converter according to the embodiment of the present invention.

Referring to FIG. 1 and FIG. 3A, a current loop is formed as shown in an arrow during the switching-on of the second power switch Q2, and the second inductor L2 may be charged with energy through the current loop formed by the switching-on of the second power switch Q2.

Referring to FIGS. 1 and 3B, when the second power switch Q2 is switched-off, another current loop is formed as shown in an arrow, and the power charged in the second inductor L2 may be charged in the second capacitor C4 along a transfer path formed through the second diode D2 to output the third power Level3.

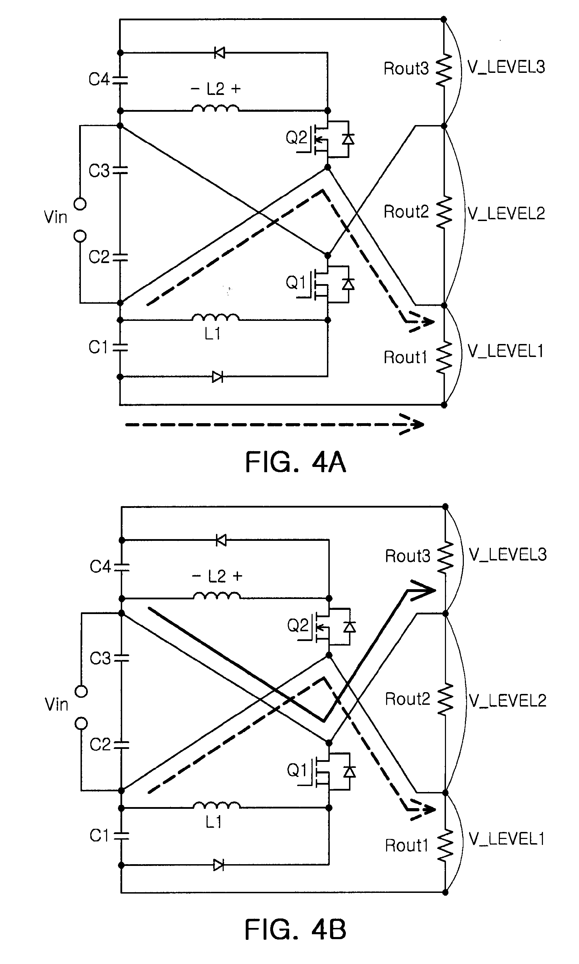

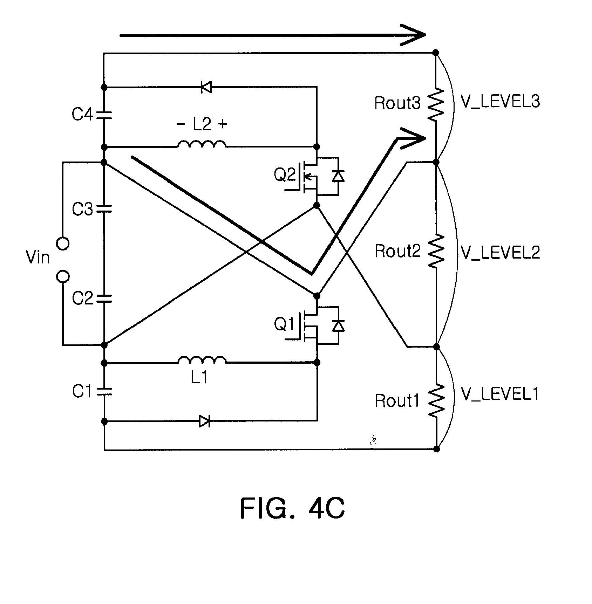

FIG. 4A through 4C are circuit diagrams showing that multi-power of the multi-level converter according to the embodiment of the present invention is output.

Referring to FIG. 4A, the power charged in the first capacitor C1 may determine a voltage level V_LEVEL1 of the first power according to the switching of the first power switch Q1 of the first buck-boost unit 110 as shown in an arrow, and the bypass unit 130 may output the second power Level2 having an original voltage level V_LEVEL2 of the input power supply Vin. Similarly, the power charged in the second capacitor C4 may determine the voltage level V_LEVEL3 of the third power as shown in an arrow according to the switching of the second power switch Q2 of the second buck-boost unit 120.

In more detail, when the first power switch Q1 is switched-on, the following voltage Equation can be obtained.

$$V_{23} = V_L = L\frac{di_{L1}}{dt}$$

$$\frac{V_{23}}{L} = \frac{di_{L1}}{dt}$$

$$(\Delta i_{L1}) = \frac{V_{23}}{L}DT$$

Meanwhile, when the first power switch Q1 is switched-off, the following voltage Equation can be obtained.

$$V_1 = V_L = L\frac{di_{L1}}{dt}$$

$$\frac{V_1}{L} = \frac{di_{L1}}{dt}$$

$$(\Delta i_{L1}) = \frac{V_1}{L}(1-D)T$$

(where V1, V23, and VL each refer to the voltage of C1, C2, C3, and L1)

In a normal state, a current value of the inductor at an end point of switching period is equal to a value at a start point thereof and therefore, pure variations of the inductor current for one period becomes '0'. Therefore, the following output voltage Equation can be established.

$$(\Delta i_L)_{open} + (\Delta i_L)_{close} = 0$$

$$\frac{V_{23}}{L}DT = \frac{V_1}{L}(1-D)T$$

$$\frac{V_{23}(D)}{(1-D)} = V_1$$

$$\therefore V_1 = \frac{D}{(1-D)}V_{23}$$

It can be appreciated that the foregoing output voltage Equation is the same as the voltage Equation of the first buck-boost unit 110 (the output voltage Equation is also the same as the voltage Equation of the second buck-boost unit 120 and the detailed description thereof will be omitted).

Meanwhile, the voltage levels Level1 and Level3 of the first power and the third power may be varied according to switching duty of the first and second power switches Q1 and Q2. In more detail, the voltage levels of the input power supply Vin may be bucked or boosted according to the switching duties of the first and second power switches Q1 and Q2 to vary the voltage levels of the first power Level1 and the third power Level3.

This will be described in more detail with reference to the accompanying drawings.

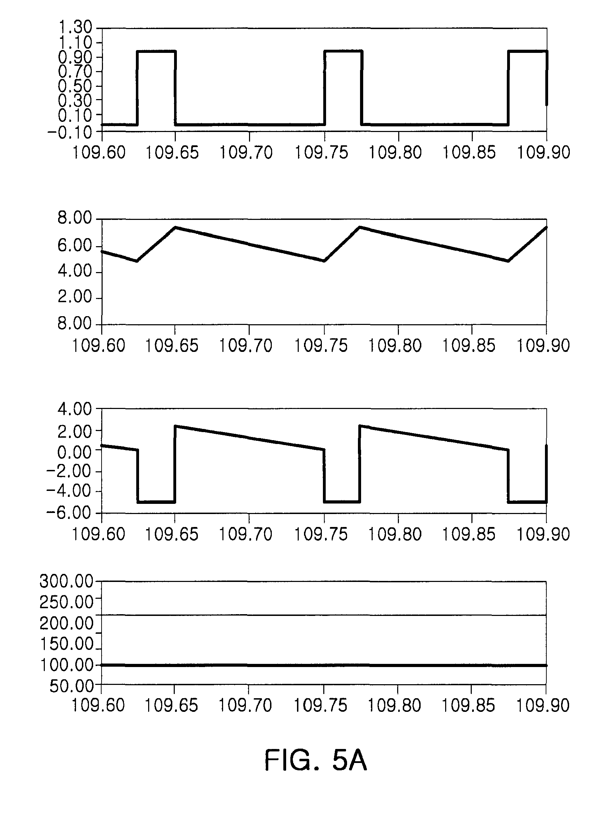

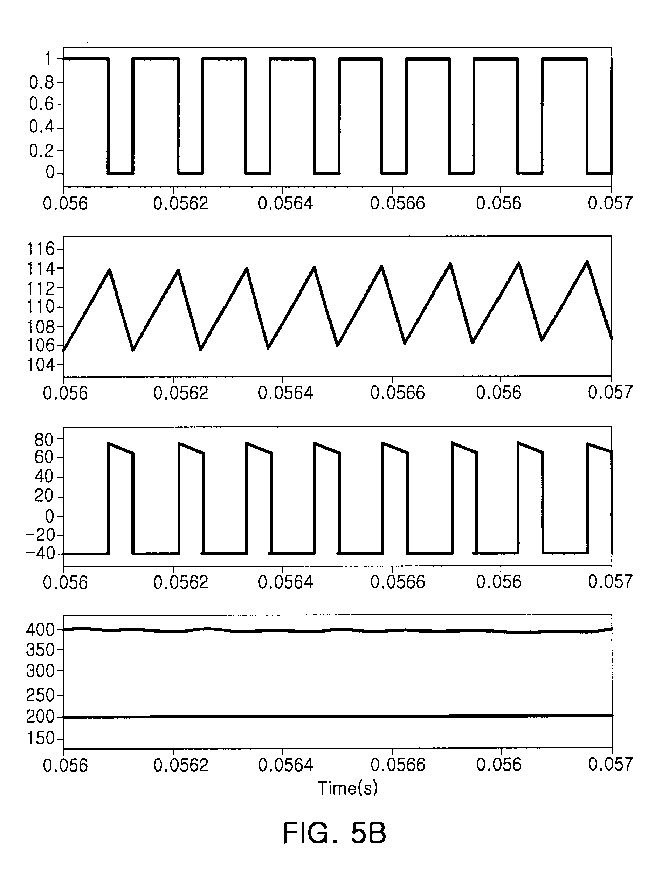

FIGS. 5A and 5B are graphs showing an output waveform of the multi-level converter according to the embodiment of the present invention.

Referring to FIG. 5A, when switching-on duty of a pulse width modulation (PWM) signal applied to the first and second power switches Q1 and Q2 is narrow (see a first graph), the energy charged in the first and second inductors L1 and L2 is reduced (see a second graph) and the current charged in the first and second capacitors C1 and C4 is reduced accordingly (see a third graph), such that it can be appreciated that the voltage levels of the first power Level1 and the third power Level3 output from the first buck-boost unit 110 and the second buck-boost unit 120 are more bucked than that of the input power supply Vin (see a fourth graph). It can be appreciated from FIG. 5A that the voltage levels of the first power Level1 and the third power Level3 are set to be 50V due to the bucking of the voltage level of the input power supply Vin when the input power supply Vin is, for example, 200 V.

On the other hand, referring to FIG. 5B, when the switching-on duty of the pulse width modulation (PWM) signal applied to the first and second power switches Q1 and Q2 is wide (see a first graph), the power charged in the first and second inductors L1 and L2 is increased (see a second graph) and the current charged in the first and second capacitors C1 and C4 is increased accordingly (see a third graph), such that it can be appreciated that the voltage levels of the first power Level1 and the third power Level3 output from the first buck-boost unit 110 and the second buck-boost unit 120 are more boosted than that of the input power supply Vin (see a fourth graph). It can be appreciated from FIG. 5B that the voltage levels of the first power Level1 and the third power Level3 are set to be 400V due to the boosting of the voltage level of the input power supply Vin when the input power supply Vin is, for example, 200 V.

As described above, the multi-level converter according to the embodiment of the present invention may output the first to third powers by a simple circuit configuration for the single input power supply, thereby reducing manufacturing costs.

Meanwhile, the multi-level converter according to the embodiment of the present invention may be adopted in the inverter and the solar power supply apparatus.

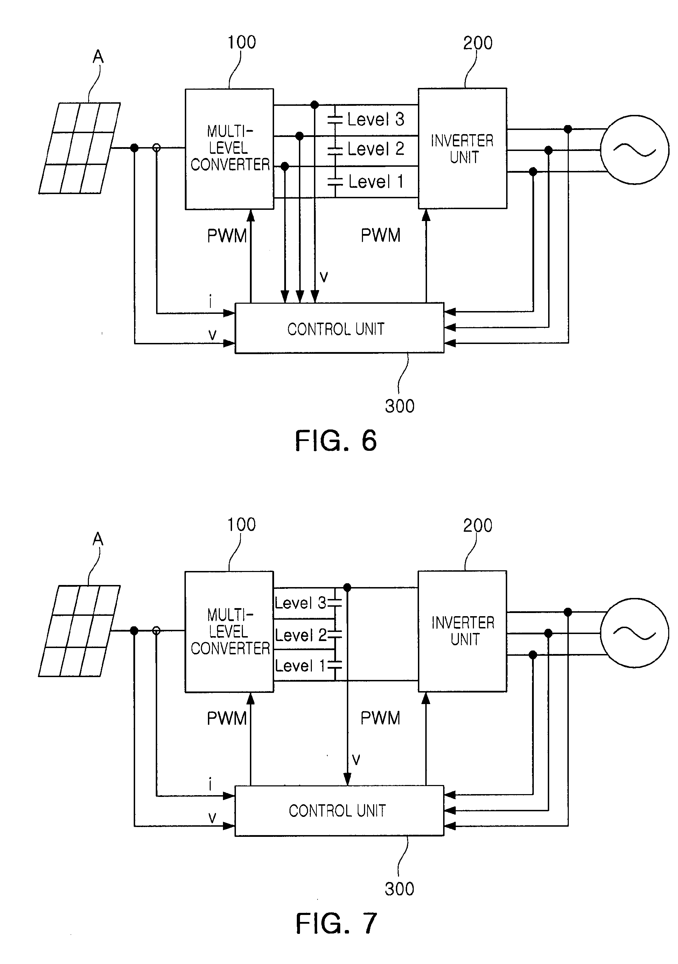

FIGS. 6 and 7 are block diagrams showing a schematic configuration of an inverter having the multi-level converter according to the embodiment of the present invention and a solar power supply apparatus having the same.

Referring to FIGS. 6 and 7, the solar power supply apparatus including the multi-level converter according to the embodiment of the present invention may include a multi-level converter 100 that outputs the single input power supply from a solar cell A as the first to third powers, an inverter unit 200 that outputs AC power by switching the power from the multi-level converter 100, and a control unit 300 that controls the switching of the multi-level converter 100 and the inverter unit 200.

The multi-level converter 100 and the inverter unit 200 may configure a single inverter that converts DC power into AC power.

When the inverter unit 200 adopts a multi-level inverting scheme, the inverter unit 200 may switch the first to third powers (Level 1 to 3), respectively, from the multi-level converter 100 to convert the switched first to third powers, respectively, into AC power, thereby variously setting the voltage levels of the AC power (see FIG. 6) and converting power corresponding to a sum of the first to third powers Level1 to 3 into AC power (see FIG. 7).

The control unit 300 may detect voltage and current of the input power supply from the solar cell A so as to be used to control an operation of the solar power supply apparatus and control the power conversion operation of the multi-level converter 100 and the inverter unit 200 based on the output power of the multi-level converter 100 and the inverter unit 200.

As described above, according to the embodiments of the present invention, the DC power having various voltage levels for the single input power supply may be generated using the simple circuit and may convert the DC power into the AC power, thereby reducing the manufacturing costs of the inverter and the solar power supply apparatus.

As set forth above, according to the embodiments of the present invention, the output power having various voltage levels with respect to the single input power supply may be provided by using the simple circuit, thereby reducing the manufacturing costs.

While the present invention has been shown and described in connection with the embodiments, it will be apparent to those skilled in the art that modifications and variations can be made without departing from the spirit and scope of the invention as defined by the appended claims.

**Claims**

1.  A multi-level converter, comprising:

    a first buck-boost unit having a first power switch switching an input power supply and outputting a first power having a voltage level varied according to switching of the first power switch;
    a bypass unit outputting a second power having a voltage level of the input power supply; and
    a second buck-boost unit having a second power switch switching the input power supply and outputting a third power having a voltage level varied according to switching of the second power switch.

2.  The multi-level converter of claim 1, wherein the voltage level of the first power of the first buck-boost unit and the voltage level of the third power of the second buck-boost unit are varied individually;

    wherein the voltage level of the first power is varied according to the duty of the first power switch, and the voltage level of the third power is varied according to the duty of the second power switch.

3.  The multi-level converter of claim 1, wherein the first buck-boost unit further includes:

    a first inductor charging and discharging the power switched according to the switching of the first power switch;
    a first capacitor charging and discharging power from the first inductor; and
    a first diode providing a power transfer path according to the switching of the power switch;
    wherein the second buck-boost unit further includes:

    a second inductor charging and discharging the power switched according to the switching of the second power switch;
    a second capacitor charging and discharging power from the second inductor; and
    a second diode providing a power transfer path according to the switching of the power switch.

4.  The multi-level converter of claim 1, wherein the bypass unit has at least one capacitor electrically connected between one terminal and the other terminal of the input power supply to which the input power supply is input.

5.  The multi-level converter of claim 3, wherein the first power switch includes a drain connected to one terminal of the input power supply to which the input power supply is input, a source connected to one terminal of the first inductor and a cathode of the first diode, and a gate receiving a control signal, and the first capacitor is connected to the other terminal of the first inductor and an anode of the first diode; wherein the second power switch includes a source connected to the other terminal of the input power supply to which the input power supply is input, a drain connected to one terminal of the second inductor and an anode of the second diode, and a gate receiving a control signal, and the second capacitor is connected to the other terminal of the second inductor and a cathode of the second diode.

6.  An inverter, comprising:

    a multi-level converter including a first buck-boost unit having a first power switch switching an input power supply and outputting a first power having a voltage level varied according to switching of the first power switch, a bypass unit outputting a second power having a voltage level of the input power supply, and a second buck-boost unit having a second power switch switching the input power supply and outputting a third power having a voltage level varied according to switching of the second power switch; and an inverter unit switching first to third powers output from the multi-level converter unit to output AC power.

7. The inverter of claim 6, wherein the voltage level of the first power of the first buck-boost unit and the voltage level of the third power of the second buck-boost unit are varied individually; wherein the voltage level of the first power is varied according to the duty of the first power switch, and the voltage level of the third power is varied according to the duty of the second power switch.

8. The inverter of claim 6, wherein the first buck-boost unit further includes:

a first inductor charging and discharging the power switched according to the switching of the first power switch; a first capacitor charging and discharging power from the first inductor; and a first diode providing a power transfer path according to the switching of the power switch; wherein the second buck-boost unit further includes:

a second inductor charging and discharging the power switched according to the switching of the second power switch; a second capacitor charging and discharging power from the second inductor; and a second diode providing a power transfer path according to the switching of the power switch.

9. The inverter of claim 6, wherein the inverter unit switches a sum of the voltage levels of the first to third powers to output AC power.

10. A solar power supply apparatus, comprising:

a multi-level converter including a first buck-boost unit having a first power switch switching an input power supply from a solar cell and outputting a first power having a voltage level varied according to switching of the first power switch, a bypass unit outputting a second power having a voltage level of the input power supply, and a second buck-boost unit having a second power switch switching the input power supply and outputting a third power having a voltage level varied according to switching of the second power switch; and an inverter unit switching power output from the multi-level converter unit to output AC power.

11. The solar power supply apparatus of claim 10, wherein the voltage level of the first power is varied according to the duty of the first power switch, and the voltage level of the third power is varied according to the duty of the second power switch.

12. The solar power supply apparatus of claim 10, wherein the first buck-boost unit further includes:

a first inductor charging and discharging the power switched according to the switching of the first power switch; a first capacitor charging and discharging power from the first inductor; and a first diode providing a power transfer path according to the switching of the power switch.

13. The solar power supply apparatus of claim 10, wherein the second buck-boost unit further includes:

a second inductor charging and discharging the power switched according to the switching of the second power switch; a second capacitor charging and discharging power from the second inductor; and a second diode providing a power transfer path according to the switching of the power switch.

14. The solar power supply apparatus of claim 10, wherein the bypass unit has at least one capacitor electrically connected between one terminal and the other terminal of the input power supply to which the input power supply is input.

15. The solar power supply apparatus of claim 10, wherein the inverter unit switches a sum of the voltage levels of the first to third powers, respectively, to output AC power.

FIG. 1

FIG. 2A

FIG. 2B

FIG. 3A

FIG. 3B

FIG. 4A

FIG. 4B

FIG. 4C

FIG. 5A

FIG. 5B

100

200

A

MULTI-LEVEL CONVERTER

Level 3
Level 2
Level 1

INVERTER UNIT

PWM

PWM

i

v

v

CONTROL UNIT

300

FIG. 6

100

200

A

MULTI-LEVEL CONVERTER

Level 3
Level 2
Level 1

INVERTER UNIT

PWM

PWM

v

i

v

CONTROL UNIT

300

FIG. 7

**REFERENCES CITED IN THE DESCRIPTION**

**Patent documents cited in the description**

- KR 1020120071037

- KR 1020090133036